(19) Europäisches Patentamt

European Patent Office

Office européen des brevets

(11) **EP 1 125 969 B1**

(12) **EUROPÄISCHE PATENTSCHRIFT**

(45) Veröffentlichungstag und Bekanntmachung des Hinweises auf die Patenterteilung:
**14.09.2005 Patentblatt 2005/37**

(51) Int Cl.⁷: $C08J\ 5/18$, B32B 27/36

(21) Anmeldenummer: **01103151.5**

(22) Anmeldetag: **10.02.2001**

(54) **Weisse, biaxial orientierte Folie aus einem kristallisierbaren Thermoplasten mit hohem Weissgrad**

White, biaxially oriented film made from a crystallizable thermoplastic having high degree of whiteness

Feuille blanche à orientation biaxiale, à base d'un thermoplastique crystallisable, ayant un degré de blancheur élevé

(84) Benannte Vertragsstaaten:
**DE FR GB IT LU NL**

(30) Priorität: **19.02.2000 DE 10007721**

(43) Veröffentlichungstag der Anmeldung:
**22.08.2001 Patentblatt 2001/34**

(73) Patentinhaber: **Mitsubishi Polyester Film GmbH 65203 Wiesbaden (DE)**

(72) Erfinder:
• **Murschall, Ursula, Dr.
55283 Nierstein (DE)**
• **Kern, Ulrich, Dr.
55218 Ingelheim (DE)**
• **Oberländer, Klaus
65207 Wiesbaden (DE)**

(74) Vertreter: **Schweitzer, Klaus et al
Patentanwaltskanzlei Zounek,
Industriepark Kalle-Albert,
Gebäude H391
Rheingaustrasse 190-196
65174 Wiesbaden (DE)**

(56) Entgegenhaltungen:
**EP-A- 0 857 749          US-A- 5 660 931**

**Beschreibung**

Die Erfindung betrifft eine weiße, biaxial orientierte Folie aus einem kristallisierbaren Thermoplasten mit hohem Weißgrad, deren Dicke im Bereich von 10 bis 500 µm liegt. Die Folie enthält mindestens Titandioxid als Pigment und einen optischen Aufheller und zeichnet sich durch eine gute Verstreckbarkeit und durch sehr gute optische und mechanische Eigenschaften aus. Die Erfindung betrifft ferner ein Verfahren zur Herstellung dieser Folie und ihre Verwendung.

Weiße Folien mit einer Dicke zwischen 10 und 500 µm sind hinreichend bekannt. Der Weißgrad dieser bekannten Folien liegt in aller Regel bei $\leq$ 80%. Des Weiteren weisen die Folien eine unerwünschte Gelbstichigkeit auf, d.h. die Folien sind nicht strahlend weiß. Beispielsweise liegt der Gelbwert, der dickenabhängig ist, bei 10 bis 100 µm dicken Folien bei > 45.

Die **US-A 5,660,931** beschreibt z.B. eine opake Polyesterfolie die als Weißpigment Bariumsulfat enthält und einen optischen Aufheller. Die Folie mit diesen Additiven besitzt allerdings eine negative Gelbzahl, was einem blaustichigen Aussehen der Folie entspricht. Das hohe Maß an Opazität dieser Folie geht aber auf das Entstehen von Hohlräumen in der Polymermatrix zurück, die sich rund um die eingelagerten Partikel der Additive ausbilden. Diese zahlreichen Hohlräume sind allerdings dafür verantwortlich, dass die mechanische Festigkeit der Folie sehr zu wünschen lässt.

Aufgabe der vorliegenden Erfindung war es, eine weiße Folie mit einer Dicke von 10 bis 500 µm bereitzustellen, die neben einer guten Verstreckbarkeit, guten mechanischen sowie optischen Eigenschaften vor allem einen hohen Weißgrad in Kombination mit einem niedrigen Gelbwert aufweist.

Zu den guten optischen Eigenschaften zählen beispielsweise eine homogene, streifenfreie Einfärbung über die gesamte Folienbreite und -länge, eine niedrige Transparenz ($\leq$ 40%) und ein akzeptabler Oberflächenglanz ($\geq$ 10).

Ein niedriger Gelbwert bedeutet, dass der Gelbwert der Folien bei einer Foliendicke im Bereich von 10 bis 500 µm gemäß der Erfindung bei $\leq$ 40, vorzugsweise $\leq$ 35, besonders bevorzugt bei $\leq$ 30 liegt

Ein hoher Weißgrad bedeutet, dass der Weißgrad der Folien bei > 85%, vorzugsweise bei $\geq$ 87%, insbesondere bei $\geq$ 90% liegt

Zu den guten mechanischen Eigenschaften zählt unter anderem ein hoher E-Modul ($E_{MD}$ > 3300 N/mm$^2$; $E_{TD}$ > 4800 N/mm$^2$) sowie gute Reißfestigkeitswerte (in MD > 130 N/mm$^2$; in TD > 180 N/mm$^2$) und gute Reißdehnungswerte in Längs- und Querrichtung (in MD > 120 %; in TD > 70 %).

Zu der guten Verstreckbarkeit zählt, dass sich die Folie bei ihrer Herstellung sowohl in Längs- als auch in Querrichtung hervorragend und ohne Abrisse orientieren läßt.

Darüber hinaus sollte die erfindungsgemäße Folie rezyklierbar sein, d.h. dass während der Folienherstellung im laufenden Betrieb anfallendes Verschnittmaterial wieder in den Produktionsbetrieb zurückgeschleust werden kann, insbesondere ohne Verlust der optischen und der mechanischen Eigenschaften der Folie.

Gelöst wird diese Aufgabe durch eine weiße Folie mit einer Dicke im Bereich von 10 bis 500 µm, die als Hauptbestandteil einen kristallisierbaren Thermoplasten enthält, mindestens ein Titandioxid vom Rutil-Typ als Weißpigment und mindestens einen optischen Aufheller, deren Kennzeichenmerkmale darin zu sehen sind, dass die Folie einen E-Modul in Längsrichtung von größer/gleich 3300 n/mm$^2$ und einen E-Modul in Querrichtung von größer/gleich 4800 N/mm$^2$ besitzt, wobei der optische Aufheller und/oder das Titandioxid als Masterbatch bei der Folienherstellung zudosiert werden.

Die weiße Folie enthält als Hauptbestandteil einen kristallisierbaren Thermoplasten. Geeignete kristallisierbare bzw. teilkristalline Thermoplaste sind beispielsweise Polyethylenterephthalat, Polybutylenterephthalat, Polyethylennaphthalat, wobei Polyethylenterephthalat bevorzugt ist.

Erfindungsgemäß versteht man unter kristallisierbarem Thermoplasten

- kristallisierbare Homopolymere;
- kristallisierbare Copolymere;
- kristallisierbare Compounds;
- kristallisierbares Rezyklat und
- andere Variationen von kristallisierbaren Thermoplasten.

Die weiße Folie kann sowohl einschichtig als auch mehrschichtig sein. Die weiße Folie kann ebenfalls mit diversen Copolyestern oder Haftvermittlern beschichtet sein.

Die weiße Folie enthält mindestens Titandioxid vom Rutil-Typ als Pigment, wobei die Menge an Pigment vorzugsweise zwischen 0,3 und 25 Gew.-% liegt, bezogen auf das Gewicht des kristallisierbaren Thermoplasten. Erfindungsgemäß wird das Titandioxid über die sogenannte Masterbatch-Technologie bei der Folienherstellung zudosiert.

Die Folie enthält mindestens einen optischen Aufheller, wobei der optische Aufheller in Mengen von 10 bis 50.000 ppm, insbesondere von 20 bis 30.000 ppm, besonders bevorzugt von 50 bis 25.000 ppm, bezogen auf das Gewicht des kristallisierbaren Thermoplasten, eingesetzt wird. Erfindungsgemäß wird auch der optische Aufheller über die sogenannte Masterbatch-Technologie bei der Folienherstellung zudosiert.

Die erfindungsgemäßen optischen Aufheller sind in der Lage, UV-Strahlen im Bereich von 360 bis 380 nm zu absorbieren und als längerwelliges, sichtbares blauviolettes Licht wieder abzugeben.

Geeignete optische Aufheller sind Bis-benzoxazole, Phenylcumarine und Bis-sterylbiphenyle, insbesondere Phenylcumarin, besonders bevorzugt sind Triazin-phenylcumarin, das unter der Produktbezeichnung ®Tinopal bei Ciba-Geigy, Basel, Schweiz erhältlich ist, oder ®Hostalux KS (Clariant, Deutschland) sowie ®Eastobrite OB-1 (Eastman).

Sofern zweckmäßig können neben dem optischen Aufheller auch noch in Polyester lösliche blaue Farbstoffe zugesetzt werden. Als geeignete blaue Farbstoffe haben sich Kobaltblau, Ultramarinblau und Anthrachinonfarbstoffe, insbesondere Sudanblau 2 (BASF, Ludwigshafen, Bundesrepublik Deutschland) erwiesen.

Die blauen Farbstoffe werden in Mengen von 10 bis 10.000 ppm, insbesondere 20 bis 5.000 ppm, besonders bevorzugt 50 bis 1.000 ppm, bezogen auf das Gewicht des kristallisierbaren Thermoplasten, eingesetzt.

Die Titandioxidteilchen bestehen überwiegend aus Rutil, welcher im Vergleich zu Anatas eine höhere Deckkraft zeigt. In einer bevorzugten Ausführungsform bestehen die Titandioxidteilchen zu mindestens 95 Gew.-% aus Rutil. Sie können nach einem üblichen Verfahren, z.B. nach dem Chlorid- oder dem Sulfat-Prozeß, hergestellt werden. Ihre Menge in der Kernschicht beträgt zweckmäßigerweise 0,3 bis 25 Gew.-%, bezogen auf das Gewicht der Kernschicht. Die mittlere Teilchengröße ist relativ klein und liegt vorzugsweise im Bereich von 0,10 bis 0,30 μm, gemessen nach der Sedigraphmethode.

Durch Titandioxid der vorstehend beschriebenen Art entstehen innerhalb der Polymermatrix keine Vakuolen während der Folienherstellung.

Die Titandioxidteilchen können einen Überzug aus anorganischen Oxiden besitzen, wie er üblicherweise als Überzug für $TiO_2$-Weißpigment in Papieren oder Anstrichmitteln zur Verbesserung der Lichtechtheit eingesetzt wird.

$TiO_2$ ist bekanntlichfotoaktiv. Bei Einwirkung von UV-Strahlen bilden sich freie Radikale auf der Oberfläche der Partikel. Diese freien Radikale können in die Polymermatrix wandern, was zu Abbaureaktionen und Vergilbung führt. Um dies zu vermeiden, können die $TiO_2$-Partikel oxidisch beschichtet werden. Zu den besonders geeigneten Oxiden für die Beschichtung gehören die Oxide von Aluminium, Silicium, Zink oder Magnesium oder Mischungen aus zwei oder mehreren dieser Verbindungen. $TiO_2$-Partikel mit einem Überzug aus mehreren dieser Verbindungen werden z. B. in der EP-A-0 044 515 und EP-A-0 078 633 beschrieben. Weiterhin kann der Überzug organische Verbindungen mit polaren und unpolaren Gruppen enthalten. Die organischen Verbindungen müssen bei der Herstellung der Folie durch Extrusion der Polymerschmelze ausreichend thermostabil sein. Polare Gruppen sind beispielsweise -OH; - OR; -COOX; (X = R; H oder Na, R = Alkyl mit 1 bis 34 C-Atomen). Bevorzugte organische Verbindungen sind Alkanole und Fettsäuren mit 8 bis 30 C-Atomen in der Alkylgruppe, insbesondere Fettsäuren und primäre n-Alkanole mit 12 bis 24 C-Atomen, sowie Polydiorganosiloxane und/oder Polyorganohydrogensiloxane wie z. B. Polydimethylsiloxan und Polymethylhydrogensiloxan.

Der Überzug für die Titandioxidteilchen besteht gewöhnlich aus 1 bis 12, insbesondere 2 bis 6 g anorganischer Oxide und/oder 0,5 bis 3, insbesondere 0,7 bis 1,5 g organischer Verbindung, bezogen auf 100 g Titandioxidteilchen. Der Überzug wird üblicherweise auf die Teilchen in wässriger Suspension aufgebracht. Die anorganischen Oxide können aus wasserlöslichen Verbindungen, z. B. Alkali-, insbesondere Natriumnitrat, Natriumsilikat (Wasserglas) oder Kieselsäure in der wässrigen Suspension ausgefällt werden.

Unter anorganischen Oxiden wie $Al_2O_3$ oder $SiO_2$ sind auch die Hydroxide oder deren verschiedene Entwässerungsstufen wie z. B. Oxidhydrat zu verstehen, ohne dass man deren genaue Zusammensetzung und Struktur kennt. Auf das $TiO_2$-Pigment werden nach dem Glühen und Mahlen in wässriger Suspension die Oxidhydrate z. B. des Aluminiums und/oder Silicium gefällt, die Pigmente werden dann gewaschen und getrocknet. Diese Ausfällung kann somit direkt in einer Suspension geschehen, wie sie im Herstellprozeß nach der Glühung und der sich anschließenden Naßmahlung anfällt. Die Ausfällung der Oxide und/oder Oxidhydrate der jeweiligen Metalle erfolgt aus den wasserlöslichen Metallsalzen im bekannten pH-Bereich. Für das Aluminium wird beispielsweise Aluminiumsulfat in wässriger Lösung (pH: ≤ 4) eingesetzt und durch Zugabe von wässriger Ammoniaklösung oder Natronlauge im pH-Bereich zwischen 5 und 9, vorzugsweise zwischen 7 und 8,5, das Oxidhydrat gefällt. Geht man von einer Wasserglas- oder Alkalialuminatlösung aus, sollte der pH-Wert der vorgelegten $TiO_2$-Suspension im stark alkalischen Bereich (pH: ≥ 8) liegen. Die Ausfällung erfolgt dann durch Zugabe von Mineralsäure wie Schwefelsäure im pH-Bereich 5 bis 8. Nach der Ausfällung der Metalloxide wird die Suspension noch 15 min bis etwa 2 Stunden gerührt, wobei die ausgefällten Schichten eine Alterung erfahren. Das beschichtete Produkt wird von der wässrigen Dispersion abgetrennt und nach dem Waschen bei erhöhter Temperatur, insbesondere im Bereich von 70 bis 100 °C, getrocknet.

In einer bevorzugten Ausführungsform enthält die Folie gemäß der Erfindung neben dem kristallisierbaren Thermoplasten, der vorzugsweise Polyethylenterephthalat ist, 0,3 bis 25 Gew.-% Titandioxid vom Rutil-Typ mit einem Teilchendurchmesser von 0,1 bis 0,5 μm, welches als Masterbatch bei der Folienherstellung zudosiert wird, wobei Titandioxid der Firma Kerr McGee (®Tronox RFK2) oder Sachtleben (®Hombitan der Klassen R oder RC) bevorzugt wird, sowie 10 bis 50.000 ppm eines optischen Aufhellers, der ebenfalls über Masterbatch zudosiert wird und der im Thermoplasten löslich ist, wobei Triazin-phenylcumarin (®Tinopal, Ciba Geigy, Schweiz), ®Hostalux KS (Clariant, Deutschland) sowie ®Eastobright OB-1 (Eastman) besonders bevorzugt sind.

Gegebenenfalls kann die erfindungsgemäße Folie noch einen blauen Farbstoff, der zweckmäßigerweise auch als Masterbatch bei der Folienherstellung zu dosiert wird, enthalten, wobei ®Sudanblau 2 (BASF, Deutschland) bevorzugt wird.

Durch die synergistische Wirkung des Titandioxid vom Rutil-Typ, des optischen Aufhellers und der Zudosierung überdie Masterbatch-Technologie weist die Folie einen Weißgrad von ≥ 85%, vorzugsweise ≥ 87%, insbesondere ≥ 90% in Kombination mit einem Gelbwert von ≤ 40, vorzugsweise ≤ 35, insbesondere ≤ 30 bei einer Dicke im Bereich von 10 µm bis 500 µm auf. Die Folie sieht visuell extrem weiß auf, sie hat keinen Gelbstich.

Die Standardviskosität SV (DCE) des Polyethylenterephthalats, gemessen in Dichloressigsäure nach DIN 53728, liegt zwischen 600 und 1000, vorzugsweise zwischen 700 und 900.

Die intrinsische Viskosität IV (DCE) berechnet sich aus der Standardviskosität SV (DCE) wie folgt:

$$IV (DCE) = 6,67 \cdot 10^{-4} \, SV (DCE) + 0,118$$

Die erfindungsgemäße weiße Folie kann sowohl einschichtig als auch mehrschichtig sein. In der mehrschichtigen Ausführungsform ist die weiße Folie aus mindestens einer Kernschicht und mindestens einer Deckschicht aufgebaut, wobei insbesondere ein dreischichtiger A-B-A oder A-B-C Aufbau bevorzugt ist.

Für diese Ausführungsform ist es wesentlich, dass das Polyethylenterephthalat der Kernschicht eine ähnliche Standardviskosität besitzt wie das Polyethylenterephthalat der Deckschicht (en), die an die Kernschicht angrenzt (angrenzen).

In einer besonderen Ausführungsform können die Deckschichten auch aus einem Polyethylennaphthalat-Homopolymeren oder aus einem Polyethylenterephthalat-Polyethylennaphthalat-Copolymeren oder einem Compound bestehen. In dieser besonderen Ausführungsform haben die Thermoplaste der Deckschichten ebenfalls eine ähnliche Standardviskosität wie das Polyethylenterephthalat der Kernschicht. In der mehrschichtigen Ausführungsform sind das Titandioxid sowie der optische Aufheller und gegebenenfalls der blaue Farbstoff vorzugsweise in der Kernschicht enthalten. Bei Bedarf können auch die Deckschichten ausgerüstet sein.

Anders als in der einschichtigen Ausführungsform bezieht sich in der mehrschichtigen Ausführungsform die Menge an Additiven auf das Gewicht der Thermoplasten in der mit dem/den Additiven ausgerüsteten Schicht.

Des Weiteren ist die erfindungsgemäße Folie ohne Umweltbelastung und ohne Verlust der mechanischen Eigenschaften problemlos rezyklierbar, wodurch sie sich beispielsweise. für die Verwendung als kurzlebige Werbeschilder, Labels oder anderer Werbeartikel eignet.

Die Herstellung der erfindungsgemäßen Folie kann beispielsweise nach einem Extrusionsverfahren in einer Extrusionsstraße erfolgen.

Erfindungsgemäß ist die Zugabe des Titandioxids, des optischen Aufhellers und gegebenenfalls des blauen Farbstoffes über die Masterbatch-Technologie. Die Additive werden in einem festen Trägermaterial voll dispergiert. Als Trägermaterialien kommen der Thermoplast selbst, wie z. B. das Polyethylenterephthalat oder auch andere Polymere, die mit dem Thermoplasten ausreichend verträglich sind, in Frage.

Wichtig ist, dass die Korngröße und das Schüttgewicht des/der Masterbatches ähnlich der Korngröße und dem Schüttgewicht des Thermoplasten ist, so dass eine homogene Verteilung und damit eine homogene Weißfärbung und ein homogener Gelbwert erreicht werden.

Die Polyesterfolien können nach bekannten Verfahren aus einem Polyesterrohstoff mit ggf. weiteren Rohstoffen sowie dem optischen Aufheller, dem Titandioxid, gegebenenfalls dem blauen Farbstoff und/oder weiteren üblichen Additiven in üblicher Menge von 0,1 bis maximal 10 Gew.-% sowohl als Monofolien als auch als mehrschichtige, ggf. koextrudierte Folien mit gleichen oder unterschiedlich ausgebildeten Oberflächen hergestellt werden, wobei eine Oberfläche beispielsweise pigmentiert ausgerüstet ist und die andere Oberfläche kein Pigment enthält. Ebenso können eine oder beide Oberflächen der Folie nach bekannten Verfahren mit einer üblichen funktionalen Beschichtung versehen werden.

Bei dem bevorzugten Extrusionsverfahren zur Herstellung der Polyesterfolie wird das in dem Extruder aufgeschmolzene Polyestermaterial durch eine Schlitzdüse extrudiert und als weitgehend amorphe Vorfolie auf einer Kühlwalze abgeschreckt. Diese Folie wird anschließend erneut erhitzt und in Längs- und Querrichtung bzw. in Quer- und in Längsrichtung bzw. in Längs-, in Quer- und nochmals in Längsrichtung und/oder Querrichtung gestreckt. Die Strecktemperaturen liegen erfindungsgemäß bei $T_g$ + 10 K bis $T_g$ + 60 K ($T_g$ = Glastemperatur), das Streckverhältnis der Längsstreckung liegt erfindungsgemäß bei 2 bis 6, insbesondere bei 2,5 bis 4,5, das der Querstreckung bei 2 bis 5, insbesondere bei 3 bis 4,5, und das der ggf. durchgeführten zweiten Längsstreckung bei 1,1 bis 3. Die erste Längsstreckung kann ggf. gleichzeitig mit der Querstreckung (Simultantstreckung) durchgeführt werden. Anschließend folgt die Thermofixierung der Folie bei Ofentemperaturen von 200 bis 260 °C, insbesondere bei 220 bis 250 °C. Anschließend wird die Folie abgekühlt und aufgewickelt.

Durch die überraschende Kombination ausgezeichneter Eigenschaften eignet sich die erfindungsgemäße, Folie hervorragend für eine Vielzahl verschiedenerAnwendungen, beispielsweise für Innenraumverkleidungen, für Messebau und Messeartikel, für Displays, für Schilder, für Etiketten, im Laden- und Regalbau, als Werbeartikel, als Kaschiermedium und für Lebensmittelanwendungen.

Die Erfindung wird im folgenden anhand von Ausführungsbeispielen näher erläutert.

Die Messung der einzelnen Eigenschaften erfolgt dabei gemäß der folgenden Normen bzw. Verfahren.

### Meßmethoden

### Oberflächenglanz

Der Oberflächenglanz wird bei einem Messwinkel von 20° nach DIN 67530 gemessen.

### Lichttransmission/Transparenz

Unter der Lichttransmission/Transparenz ist das Verhältnis des insgesamt durchgelassenen Lichtes zur einfallenden Lichtmenge zu verstehen.

Die Lichttransmission wird mit dem Messgerät "Hazegard plus" nach ASTM D 1003 gemessen.

### Oberflächendefekte, homogene Einfärbung

Die Oberflächendefekte und die homogene Einfärbung werden visuell bestimmt.

### Mechanische Eigenschaften

Der E-Modul, die Reißfestigkeit und die Reißdehnung werden in Längs- und Querrichtung nach ISO 527-1-2 gemessen.

### SV (DCE), IV (DCE)

Die Standardviskosität SV (DCE) wird angelehnt an DIN 53726 in Dichloressigsäure gemessen. Die intrinsische Viskosität (IV) berechnet sich wie folgt aus der Standardviskosität (SV)

$$IV\ (DCE) = 6{,}67 \cdot 10^{-4}\ SV\ (DCE) + 0{,}118$$

### Gelbwert

Der Gelbwert YID ist die Abweichung von der Farblosigkeit in Richtung "Gelb" und wird gemäß DIN 6167 gemessen.

### Weißgrad

Der Weißgrad wird nach Berger bestimmt, wobei in der Regel mehr als 20 Folienlagen aufeinander gelegt werden. Die Bestimmung des Weißgrades erfolgt mit Hilfe des elektrischen Remissionsphotometers ®ELREPHO der Firma Zeiss, Oberkochem (DE), Normlichtart C, 2° Normalbeobachter. Der Weißgrad wird als WG = RY + 3RZ - 3RX definiert.

WG = Weißgrad, RY, RZ, RX = entsprechende Reflexionsfaktoren bei Einsatz des Y-, Z- und X-Farbmessfilters. Als Weißstandard wird ein Pressling aus Bariumsulfat (DIN 5033, Teil 9) verwendet. Eine ausführliche Beschreibung ist z.B. in Hansl Loos "Farbmessung", Verlag Beruf und Schule, Itzehoe (1989), beschrieben.

In den nachstehenden Beispielen und Vergleichsbeispielen handelt es sich jeweils um einschichtige oder mehrschichtige Folien, die auf der beschriebenen Extrusionsstraße hergestellt werden.

**Beispiel 1**

Es wurde eine 75 µm dicke, weiße Folie hergestellt, die als Hauptbestandteil Polyethylenterephthalat (RT49, KoSa, Deutschland), 7 Gew.-% Titandioxid vom Rutil-Typ (Tronox RFK2, Kerr McGee, Deutschland), 200 ppm optischen Aufheller (Hostalux KS, Clariant, Deutschland) sowie 30 ppm blauen Farbstoff Sudanblau 2 (BASF, Deutschland) enthielt.

Die Additive Titandioxid, optischer Aufheller und blauer Farbstoff wurden als Masterbatche zugegeben.

Das Polyethylenterephthalat, aus dem die Folie hergestellt wurde und das Polyethylenterephthalat, das zur Herstellung der Masterbatche verwendet wurde, hatten eine Standardviskosität SV (DCE) von 810, was einer intrinsischen Viskosität von 0,658 dl/g entspricht.

Das Masterbatch (1) setzte sich zusammen aus 50 Gew.-% Titandioxid, 0,14 Gew.-% optischem Aufheller sowie 49,86 Gew.-% Klarrohstoff. Das Masterbatch (2) enthielt neben Klarrohstoff 1500 ppm blauen Farbstoff.

Vorder Extrusion wurden 14 Gew.-% Masterbatch (1), 2 Gew-.% Masterbatch (2) sowie 84 Gew.-% Klarrohstoff bei einer Temperatur von 150 °C getrocknet und anschließend im Extruder aufgeschmolzen.

**Beispiel 2**

Es wurde ebenfalls ein 75 µm dicke, weiße Folie hergestellt. Die Folie aus Beispiel 2 enthielt 14 Gew.-% Masterbatch (1) und 86 Gew.-% Klarrohstoff. Sie enthielt aber keinen blauen Farbstoff.

**Beispiel 3**

Es wurde eine 23 µm dicke, koextrudierte weiße ABA-Folie hergestellt, wobei A die Deckschichten und B die Kernschicht symbolisiert. Die Rezeptur der 20 um dicken Kernschicht entsprach der Rezeptur des Beispiels 2. Die 1,5 µm dicken Deckschichten enthielten 93 Gew.-% Klarrohstoff sowie 7 Gew.-% eines Masterbatches, das neben Klarrohstoff 10.000 ppm Siliciumdioxid (®Sylobloc, Grace, Deutschland) enthielt. Diese Folie zeichnete sich durch einen ganz besonders hohen Oberflächenglanz aus.

**Vergleichsbeispiel 1**

Es wurde eine 75 µm dicke Monofolie hergestellt. Die Rezepturierung der Folie entsprach der aus Beispiel 2. Das Titandioxid-Masterbatch enthielt jedoch keinen optischen Aufheller.

**Vergleichsbeispiel 2**

Die 75 µm dicke weiße Folie aus Vergleichsbeispiel 2 enthielt wie die Folie aus Vergleichsbeispiel 1 neben Klarrohstoff lediglich 7 Gew.-% Titandioxid. Hier wurde jedoch nun ein Titandioxid vom Anatas-Typ (®Hombitan, Sachtleben, Deutschland) eingesetzt, das direkt beim Rohstoffhersteller in den Polyester eingearbeitet worden war.

Die hergestellten weißen PET-Folien hatten das in der folgenden Tabelle illustrierte Eigenschaftsprofil:

## Tabelle

| Eigenschaften | Bsp. 1 | Bsp. 2 | Bsp. 3 | Vgl.- Bsp. 1 | Vgl.- Bsp. 2 |
|---|---|---|---|---|---|
| Dicke [µm] | 75 | 75 | 23 | 75 | 75 |
| Oberflächenglanz       1. Seite | 50 | 55 | 160 | 45 | 50 |
| (Messwinkel 20°)       2. Seite | 50 | 50 | 160 | 50 | 50 |
| Lichttransmission/Transparenz [%] | 30 | 28 | 40 | 30 | 32 |
| Weißgrad (nach Berger) [%] | 94 | 94 | 90 | 84 | 82 |
| Gelbzahl (YID) | 20 | 22 | 12 | 31 | 48 |
| E-Modul längs [N/mm²] | 4400 | 4300 | 4400 | 4300 | 4350 |
| E-Modul quer [N/mm²] | 5700 | 5500 | 5500 | 5600 | 5650 |
| Reißfestigkeit längs [N/mm²] | 200 | 210 | 200 | 250 | 200 |
| Reißfestigkeit quer [N/mm²] | 260 | 270 | 260 | 260 | 260 |
| Reißdehnung längs [%] | 140 | 140 | 120 | 140 | 135 |
| Reißdehnung quer [%] | 90 | 100 | 100 | 100 | 90 |
| Einfärbung | strahlend weiß | strahlend weiß | strahlend weiß | weiß | gelb- stichig |

## Patentansprüche

1. Weiße Folie mit einer Dicke im Bereich von 10 bis 500 µm, die als Hauptbestandteil einen kristallisierbaren Thermoplasten enthält, mindestens ein Titandioxid vom Rutil-Typ als Weißpigment und mindestens einen optischen Aufheller, **dadurch gekennzeichnet, dass** die Folie

   - einen E-Modul in Längsrichtung von größer/gleich 3300 N/mm$^2$ und
   - einen E-Modul in Querrichtung von größer/gleich 4800 N/mm$^2$ besitzt, wobei der optische Aufheller und/oder das Titandioxid als Masterbatch bei der Folienherstellung zudosiert werden.

2. Weiße Folie nach Anspruch 1, **dadurch gekennzeichnet, dass** sie einen kristallisierbaren Thermoplasten enthält ausgewählt aus der Gruppe enthaltend Polyethylenterephthalat, Polybutylenterephthalat und Polyethylennaphthalat, wobei Polyethylenterephthalat bevorzugt ist.

3. Weiße Folie nach Anspruch 1 oder 2, **dadurch gekennzeichnet, dass** die Menge an Weißpigment zwischen 0,3 und 25 Gew.-% liegt, bezogen auf das Gewicht des kristallisierbaren Thermoplasten.

4. Weiße Folie nach einem der Ansprüche 1 bis 3, **dadurch gekennzeichnet, dass** sie den optische Aufheller in einer Menge von 10 bis 50.000 ppm enthält, bezogen auf das Gewicht des kristallisierbaren Thermoplasten.

5. Weiße Folie nach Anspruch 4, **dadurch gekennzeichnet, dass** sie einen optischen Aufheller enthält ausgewählt aus der Gruppe enthaltend Bis-benzoxazole, Phenylcumarine und Bis-sterylbiphenyle, insbesondere, Triazin-phenylcumarin.

6. Weiße Folie nach einem der Ansprüche 1 bis 5, **dadurch gekennzeichnet, dass** sie zusätzlich zu dem optischen Aufheller einen in Polyester löslichen blauen Farbstoff enthält ausgewählt aus der Gruppe enthaltend Kobaltblau, Ultramarinblau, Anthrachinonfarbstoffe oder Kombinationen aus diesen, insbesondere Sudanblau 2, und dass die Menge an blauem Farbstoff im Bereich von 10 bis 10.000 ppm liegt, bezogen auf das Gewicht des kristallisierbaren Thermoplasten.

**7.** Weiße Folie nach einem der Ansprüche 1 bis 6, **dadurch gekennzeichnet, dass** sie Titandioxidteilchen enthält, die zu mindestens 95 Gew.-% aus Rutil bestehen und die eine mittlere Teilchengröße im Bereich von 0,10 bis 0,30 µm besitzen (Sedigraphmethode).

**8.** Weiße Folie nach Anspruch 7, **dadurch gekennzeichnet, dass** die Titandioxidteilchen einen Überzug aus anorganischen Oxiden und/oder organischer Verbindung besitzen, und dass der Überzug eine Menge von 1 bis 12 g, anorganische Oxide und/oder von 0,5 bis 3 g, organische Verbindung, bezogen auf 100 g Titandioxidteilchen, enthält.

**9.** Weiße Folie nach einem der Ansprüche 1 bis 8, **dadurch gekennzeichnet, dass** sie einen Weißgrad von $\geq$ 85%, in Kombination mit einem Gelbwert von $\leq$ 40, bei einer Dicke im Bereich von 10 bis 500 µm aufweist.

**10.** Weiße Folie nach einem der Ansprüche 1 bis 9, **dadurch gekennzeichnet, dass** sie einschichtig oder mehrschichtig ist, dass sie in der mehrschichtigen Ausführungsform aus mindestens einer Kernschicht und mindestens einer Deckschicht aufgebaut ist und dass insbesondere ein dreischichtiger A-B-A oder A-B-C Aufbau bevorzugt ist.

**11.** Weiße Folie nach Anspruch 10, **dadurch gekennzeichnet, dass** das Titandioxid sowie der optische Aufheller und der blaue Farbstoff in der Kernschicht enthalten sind oder dass auch die Deckschichten ausgerüstet sind.

**12.** Verfahren zum Herstellen einer weißen Folie nach einem der Ansprüche 1 bis 11, nach dem Extrusionsverfahren, bei dem das Thermoplastmaterial in einem Extruder aufgeschmolzen, durch eine Schlitzdüse extrudiert und als weitgehend amorphe Vorfolie auf einer Kühlwalze abgeschreckt, dann erneut erhitzt und in Längs- und Querrichtung bzw. in Quer- und in Längsrichtung bzw. in Längs-, in Quer- und nochmals in Längsrichtung und/oder Querrichtung gestreckt wird, **dadurch gekennzeichnet, dass** die Strecktemperaturen auf eine Temperatur im Bereich von $T_g$ + 10 K bis $T_g$ + 60 K, und das Streckverhältnis der Längsstreckung im Bereich von 2 bis 6, das der Querstreckung von 2 bis 5, und das der ggf. durchzuführenden zweiten Längsstreckung von 1,1 bis 3 eingestellt werden.

**13.** Verfahren nach Anspruch 12, **dadurch gekennzeichnet, dass** anschließend an die Streckung die Thermofixierung der Folie bei Ofentemperaturen im Bereich von 200 bis 260 °C, durchgeführt wird.

**14.** Verwendung einer weißen Folie nach einem der Ansprüche 1 bis 11 für Innenraumverkleidungen, für den Messebau und Messeartikel, für Displays, für Schilder, für Etiketten, im Laden- und Regalbau, als Werbeartikel, als Kaschiermedium und für Lebensmittelanwendungen.

**Claims**

**1.** A white film with a thickness of from 10 to 500 µm whose principal constituent is a crystallizable thermoplastic, at least one titanium dioxide of the rutile type as white pigment and at least one optical brightener, wherein the film comprises

- a modulus of elalsticity in longitudinal direction of larger than/equal to 3300 N/mm$^2$ and
- a modulus of elasticity in transverse direction of larger than/equal to 4800 N/mm$^2$,

where the optical brightener and/or the titanium dioxide are fed as a masterbatch during film production.

**2.** The white film as claimed in claim 1, wherein the film comprises a crystallizable thermoplastic selected from the group consisting of polyethylene terephthalate, polybutylene terephthalate and polyethylene naphthalate, preferably polyethylene terephthalate.

**3.** The white film as claimed in claim 1 or 2, wherein the amount of white pigment is between 0.3 and 25 % by weight, based on the weight of the crystallizable thermoplastic.

**4.** The white film as claimed in any one of claims 1 to 3, wherein, based on the weight of the crystallizable thermoplastic, from 10 to 50,000 ppm of optical brightener are present in the film.

**5.** The white film as claimed in claim 4, wherein the film comprises an optical brightener selected from the group consisting of bisbenzoxazoles, phenylcoumarins and bis-stearylbiphenyls, in particular triazine phenylcoumarin.

**6.** The white film as claimed in any one of claims 1 to 5, wherein, besides the optical brightener, a polyester-soluble blue dye selected from the group consisting of cobalt blue, ultramarine blue, anthraquinone dyes or combinations thereof, in particular Sudan Blue 2, is present in the film, and the amount of blue dye is from 10 to 10,000 ppm, based on the weight of the crystallizable thermoplastic.

**7.** The white film as claimed in any one of claims 1 to 6, wherein the film comprises titanium dioxide particles which are composed of at least 95 % by weight of rutile and have an average particle size of from 0.10 to 0.30 µm (Sedigraph method).

**8.** The white film as claimed in claim 7, wherein the titanium dioxide particles have a coating of inorganic oxides and/ or of an organic compound, and wherein the coating comprises from 1 to 12 g of inorganic oxides and/or from 0.5 to 3 g of organic compound, based on 100 g of titanium dioxide particles.

**9.** The white film as claimed in any one of claims 1 to 8, wherein the whiteness of the film is $\geq$ 85% and its Yellowness Index is $\leq$ 40, at a thickness of from 10 to 500 µm.

**10.** The white film as claimed in any one of claims 1 to 9, wherein the film has one or more layers, and wherein the embodiment having more than one layer has been built up from at least one core layer and from at least one outer layer, and wherein particular preference is given to a three-layer A-B-A or A-B-C structure.

**11.** The white film as claimed in claim 10, wherein the titanium dioxide and also the optical brightener and the blue dye are present in the core layer or wherein the modification has also been made to the outer layers.

**12.** A process for producing the white film as claimed in any one of claims 1 to 11 by extrusion, in which the thermoplastic material is melted in an extruder, extruded through a slot die and quenched on a chill roll, as a substantially amorphous prefilm, and then reheated and stretched longitudinally and transversely, or transversely and longitudinally, or longitudinally, transversely and again longitudinally and/or transversely, which comprises establishing the stretching temperatures at a temperature of from $T_g$ + 10 K to $T_g$ + 60 K and establishing a longitudinal stretching ratio of from 2 to 6 and a transverse stretching ratio of from 2 to 5 and establishing a ratio of from 1.1 to 3 for the second longitudinal stretching which may, if desired, be carried out.

**13.** The process as claimed in claim 12, wherein the stretching is followed by heat-setting of the film, carried out at oven temperatures of from 200 to 260 C$^\circ$.

**14.** The use of the white film as claimed in any one of claims 1 to 11 for interior decoration, for constructing exhibition stands, for exhibition requisites, for displays, for placards, for labels, in the fitting out of shops or of stores, as a promotional requisite or as a laminating material, or for applications associated with food or drink.

**Revendications**

**1.** Feuille blanche ayant une épaisseur dans la gamme de 10 à 500 µm, comprenant comme composant principal un thermoplastique cristallisable, au moins un dioxyde de titane de type rutile comme pigment blanc et au moins un azurant optique, **caractérisée en ce que** la feuille possède

- un module E dans la direction longitudinale supérieure/égale à 3300 N/mm$^2$ et
- un module E dans la direction transversale supérieure/égale à 4800 N/mm$^2$,

l'azurant optique et/ou le dioxyde de titane étant ajoutés sous forme de mélange - maître lors de la fabrication des feuilles.

**2.** Feuille blanche selon la revendication 1, **caractérisée en ce qu'**elle comprend un thermoplastique cristallisable choisi dans le groupe constitué du polyéthylène téréphtalate, du polybutylène téréphtalate et du polyéthylène naphtalate, le polyéthylène téréphtalate étant préféré.

**3.** Feuille blanche selon la revendication 1 ou 2, **caractérisée en ce que** la quantité de pigment blanc se situe entre 0,3 et 25 % en poids, par rapport au poids du thermoplastique cristallisable.

4. Feuille blanche selon l'une des revendications 1 à 3, **caractérisée en ce qu'**elle comprend l'azurant optique en une quantité de 10 à 50 000 ppm, par rapport au poids du thermoplastique cristallisable.

5. Feuille blanche selon la revendication 4, **caractérisée en ce qu'**elle comprend un azurant optique choisi dans le groupe constitué des bis-benzoxazoles, des phénylcoumarines et des bis-stérylbiphényles, en particulier de la triazine-phénylcoumarine.

6. Feuille blanche selon l'une des revendications 1 à 5, **caractérisée en ce qu'**elle comprend, en plus de l'azurant optique, un colorant bleu soluble dans le polyester, choisi dans le groupe constitué du bleu de cobalt, du bleu d'outremer, des colorants anthraquinones ou des combinaisons de ceux-ci, en particulier du bleu de Soudan 2, et que la quantité en colorant bleu se situe dans la gamme de 10 à 10 000 ppm, par rapport au poids du thermoplastique cristallisable.

7. Feuille blanche selon l'une des revendications 1 à 6, **caractérisée en ce qu'**elle comprend des particules de dioxyde de titane qui se composent d' au moins 95 % en poids de rutile et qui possèdent une granulométrie moyenne dans la gamme de 0,10 à 0,30 $\mu$m (méthode par sédigraphie).

8. Feuille blanche selon la revendication 7, **caractérisée en ce que** les particules de dioxyde de titane possèdent un revêtement d'oxydes inorganiques et/ou de composé organique et que le revêtement contient une quantité de 1 à 12 g d'oxydes inorganiques et/ou de 0,5 à 3 g de composé organique, par rapport à 100 g de particules de dioxyde de titane.

9. Feuille blanche selon l'une des revendications 1 à 8, **caractérisée en ce qu'**elle présente un degré de blancheur $\geq$ 85 % en combinaison avec un indice de jaune de $\leq$ 40, pour une épaisseur dans la gamme de 10 à 500 $\mu$m.

10. Feuille blanche selon l'une des revendications 1 à 9, **caractérisée en ce qu'**elle est monocouches ou multicouches, qu'elle est constituée, dans un mode de réalisation multicouches, d'au moins une couche centrale et d'au moins une couche de recouvrement, et que l'on préfère en particulier une structure tricouche A-B-A ou A-B-C.

11. Feuille blanche selon la revendication 10, **caractérisée en ce que** le dioxyde de titane ainsi que l'azurant optique et le colorant bleu sont compris dans la couche centrale ou qu'ils pourvoient également les couches de recouvrement.

12. Procédé de fabrication d'une feuille blanche selon l'une des revendications 1 à 11, d'après le procédé par extrusion, dans lequel la matière thermoplastique est fondue dans une extrudeuse, extrudée à travers une filière à fentes et refroidie brusquement sur un rouleau refroidisseur sous forme de préfeuille largement amorphe, puis de nouveau chauffée, ensuite étirée dans le sens longitudinal et transversal ou dans le sens transversal et longitudinal ou dans le sens longitudinal, transversal et encore une fois dans le sens longitudinal et/ou transversal, **caractérisé en ce que** les températures d'étirage sont ajustées à une température située dans la gamme de $T_v$ + 10 K à $T_v$ + 60 K, et que le rapport d'étirage de l'étirage longitudinal se situe dans la gamme de 2 à 6, de l'étirage transversal de 2 à 5 et du deuxième étirage longitudinal, le cas échéant à réaliser, de 1, 1 à 3.

13. Procédé selon la revendication 12, **caractérisé en ce que**, à la suite de l'étirage, le thermofixage de la feuille est réalisé à des températures de four situées dans la gamme de 200 à 260°C.

14. Utilisation d'une feuille blanche selon l'une des revendications 1 à 11 pour les habillages d'habitacles, pour la construction des foires et les articles de foire, pour les écrans, pour les panneaux d'affichage, pour les étiquettes, dans l'agencement des magasins et des étals, à titre d'article publicitaire, à titre de support de contre-collage et pour les applications alimentaires.